# EUROPEAN PATENT APPLICATION

(11) **EP 4 741 760 A1**
(43) Date of publication of application: **13.05.2026**
(21) Application number: 25203588.6
(22) Date of filing: 22.09.2025
(51) Int. Cl.: G01B 11/12, G01B 11/24, G01N 21/954

(54) **SYSTEMS AND METHODS FOR DETERMINING BORE CHARACTERISTICS OF A HOLE**

(30) Priority: 11.11.2024 US 202463718799 P; 03.03.2025 US 202519068166
(71) Applicant: The Boeing Company, Arlington, VA 22202 (US)
(72) Inventor: SISCO, Farahnaz, Arlington, 22202 (US); CHAN, Kwok Tung, Arlington, 22202 (US); HOLLINGSHEAD, Michael, Arlington, 22202 (US); DEVLIN, Jeff, Arlington, 22202 (US); MCRAE, Nathan, Arlington, 22202 (US)
(74) Representative: Bryn-Jacobsen, Caelia

(57) **Abstract**

A system for determining bore characteristics of a hole includes a measuring tool and a controller. The measuring tool is configured to measure a hole and generate data representing the hole. The controller is in communication with the measuring tool and is configured to determine at least one of the bore characteristics based on the data from the measuring tool.

## Description

### PRIORITY

This application claims priority from U.S. Ser. No. 63/718,799 filed on November 11, 2024.

### FIELD

The present disclosure relates generally to manufacturing and inspection and, more particularly, to systems and methods for determining bore characteristics of a hole formed through a fabricated part.

### BACKGROUND

Parts fabricated from a stackup of material layers, such as composite materials, metallic materials, or polymeric materials, are often affixed together using fasteners that extend through aligned holes in the material layers. However, such material stacks may exhibit misaligned holes, gaps in interface regions, or other nonconformities. While such nonconformities may be small, even small nonconformities may be out of tolerance, depending on the intended field of use of the resulting part. For example, aerospace parts may have particularly tight tolerances. Hence, identifying and addressing such nonconformities may be desirable. Unfortunately, identifying such nonconformities and determining bore characteristics of the holes remains complicated and time-consuming. Accordingly, those skilled in the art continue with research and development efforts in the field of inspection and analysis during manufacturing and assembling of parts.

### SUMMARY

Disclosed are examples of a system for determining bore characteristics of a hole, a measuring tool for measuring a hole, and a method for determining bore characteristics of a hole. The following is a non-exhaustive list of examples, which may or may not be claimed, of the subject matter according to the present disclosure.

In an example, the disclosed system includes a measuring tool and a controller. The measuring tool is configured to measure a hole and generate data representing the hole. The controller is in communication with the measuring tool and is configured to determine at least one of the bore characteristics based on the data from the measuring tool.

In another example, the disclosed measuring tool includes a housing, a collet, an optical probe, a linear drive, and a rotary drive. The collet is coupled to the housing and is configured to engage a portion of the hole. The optical probe is configured to extend through the collet and into the hole, scan a wall of the hole, and generate data representing the wall of the hole. The linear drive positions the optical probe along a scan axis. The rotary drive positions the optical probe about the scan axis.

In an example, the disclosed method includes steps of: (1) extending an optical probe into a hole along a scan axis; (2) rotating the optical probe within the hole about the scan axis; (3) scanning a wall of the hole; (4) generating data representing the wall of the hole; and (5) determining at least one of a plurality of bore characteristics based on the data.

Other examples of the system, the measuring tool, and the method will become apparent from the following detailed description, the accompanying drawings, and the appended claims.

### BRIEF DESCRIPTION OF THE DRAWINGS

Fig. 1 is a schematic block diagram of an example of a system for determining bore characteristics of a hole;
Fig. 2 is a flow diagram of an example of a method for determining bore characteristics of a hole;
Fig. 3 is a schematic illustration of an example of the system;
Fig. 4 is a schematic illustration of an example of a measuring tool of the system;
Fig. 5 is a schematic illustration of an example of a probe drive of the measuring tool in a retracted state;
Fig. 6 is a schematic illustration of an example of the probe drive of the measuring tool in an extended state;
Fig. 7 is a schematic illustration of an example of a portion of the probe drive;
Fig. 8 is a schematic illustration of an example of a portion of the probe drive;
Fig. 9 is a schematic, exploded, perspective view of an example of a portion of the measuring tool;
Fig. 10 is a schematic, section view of an example of a portion of the measuring tool;
Fig. 11 is a schematic illustration of an example of the measuring tool interacting with a hole;
Fig. 12 is a schematic illustration of an example of a plurality of interchangeable collets of the measuring tool;
Fig. 13 is a schematic diagram of an example of the system;
Fig. 14 is an illustration of a point cloud generated based on data collected by the system;
Fig. 15 is a schematic illustration of an example of a hole having a gap at an interface;
Fig. 16 is a schematic illustration of an example of a hole having an offset;
Fig. 17 is a schematic illustration of an example of a hole having debris at an interface;
Fig. 18 is a schematic illustration of an example of a hole having sealant at an interface;
Fig. 19 is a schematic illustration of an example of a hole having debris at an interface;
Fig. 20 is a flow diagram of an example of a dynamic starting origin method;
Fig. 21 is a flow diagram of an example of a coordinate solving method;
Fig. 22 is a schematic illustration of an example of an aircraft; and
Fig. 23 is a flow diagram of an example of an aircraft manufacturing and service method.

### DETAILED DESCRIPTION

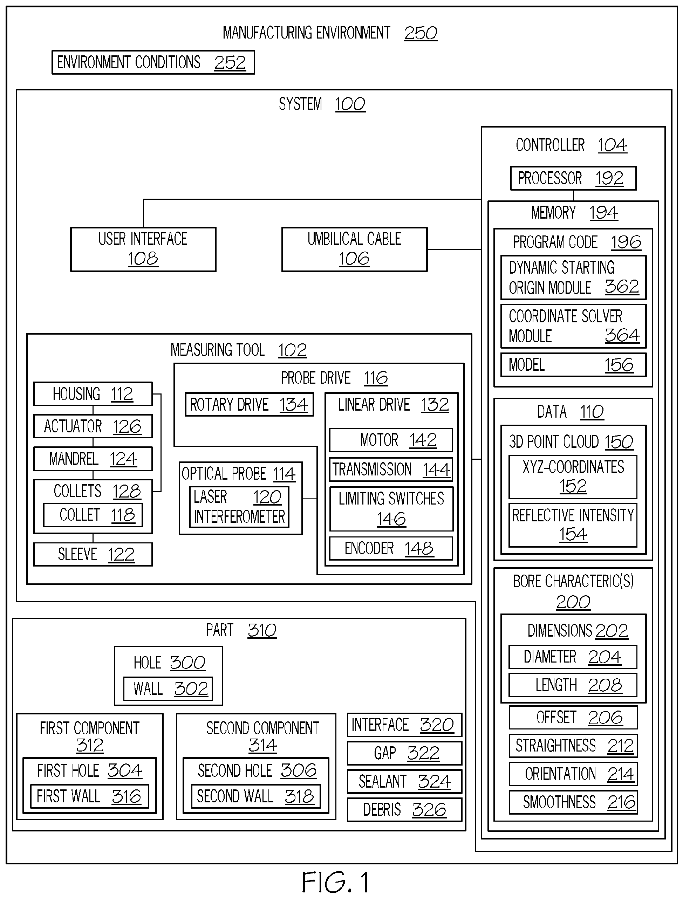

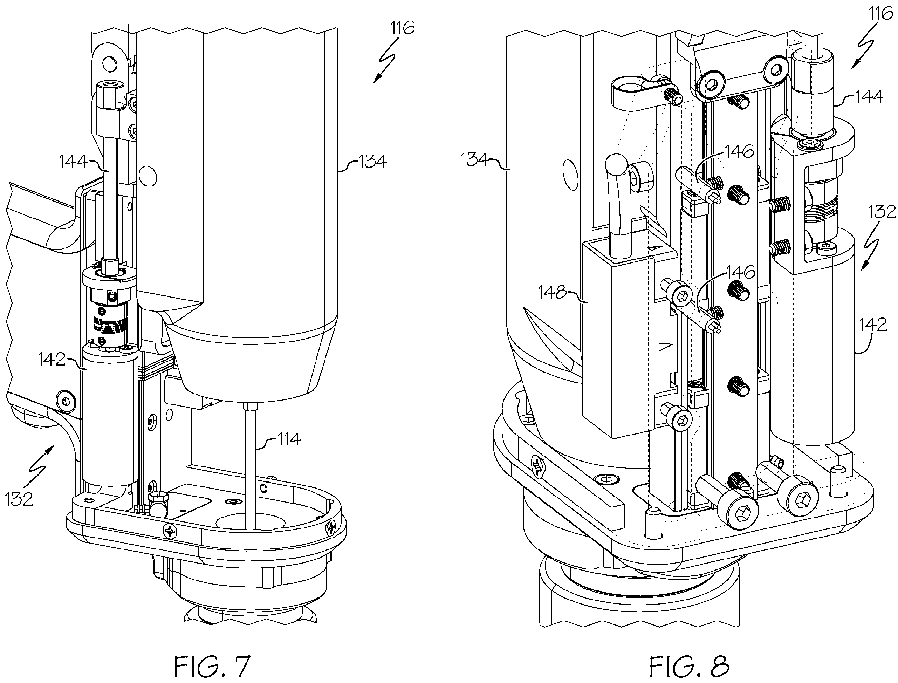

Referring to Figs. 1-21, by way of examples, the present disclosure is directed to a system 100, a measuring tool 102, and a method 1000 for determining bore characteristics 200 of a hole 300 formed though part 310. The part 310 generally includes a stackup of materials. As will be described in greater detail herein, examples of the system 100, measuring tool 102, and method 1000 utilize an insertable probe that measures the surface of a wall 302 of the hole 300 in order to determine various bore characteristics 200 of the hole 300. The techniques provided by the system 100, the measuring tool 102, and the method 1000 enable the determination of the bore characteristics 200 of holes 300 and the identification of nonconformities to be performed reliably and automatically in a substantially shorter time period than manual measurement and inspection systems and methods. In one or more examples, the techniques provided by the system 100, the measuring tool 102, and the method 1000 enable compensation for the effects of environmental conditions 252 on hole measurements.

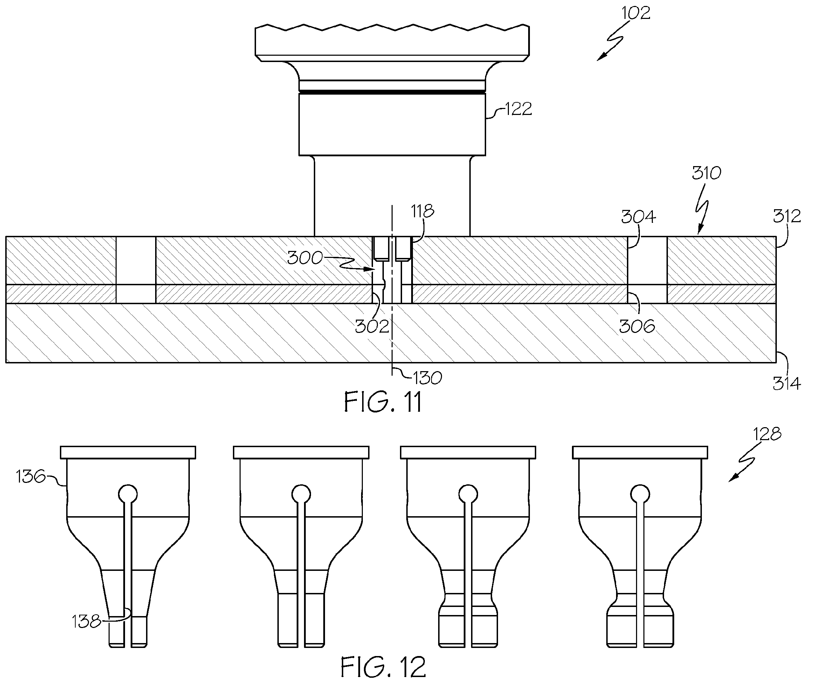

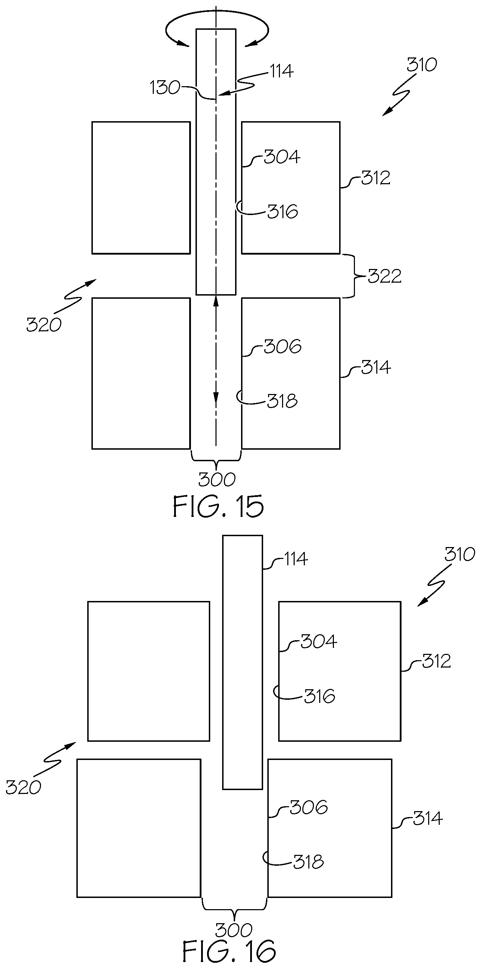

Fig. 1 schematically illustrates an example of a manufacturing environment 250 in which the system 100, measuring tool 102, and method 1000 are implemented for determining one or more of the bore characteristics 200 of the hole 300 formed through the part 310. Fig. 11 schematically illustrates an example of the part 310 and interaction of the measuring tool 102 with the hole 300. Figs. 15-19 schematically illustrate various examples of the part 310 depicting holes 300 with various examples of the bore characteristics 200 identified using the system 100, the measuring tool 102, and/or according to the method 1000. The part 310 includes a plurality of components that are to be assembled and coupled together using a mechanical fastener (e.g., bolt, rivet, etc.) installed through the hole 300 (fasteners not illustrated). In the illustrative example, the part 310 includes a first component 312 and a second component 314 that are to be arranged (e.g., stacked) and fastened together. The first component 312 includes at least one first hole 304 having a first wall 316. The second component 314 includes at least one second hole 306 having a second wall 318. The first hole 304 and the second hole 306 are aligned and form the hole 300 (e.g., the first hole 304 and the second hole 306 in combination form the hole 300 and the first wall 316 and the second wall 318 in combination form the wall 302). While examples of the part 310 are illustrated as including two components, in other examples, the part 310 can include any feasible number of components, each having a hole that is aligned with the hole in a directly adjacent component. Various parts described herein can be fabricated from composite components, metallic components, polymeric components, or a combination thereof.

In the various examples disclosed herein, measurements of the hole 300 and bore characterization of the hole 300 can be of a hole in a single component, a hole (e.g., formed by two aligned holes) in two components (e.g., stack), or a hole (formed by any number of two or more aligned holes) in any number of two or more components (e.g., stack). As an example, the system 100 and method 1000 can be used to measure and characterize holes 300 in major joints having more than two material layers.

Referring now to Figs. 1 and 3-19, the following are examples of the system 100, according to the present disclosure. Examples of the system 100 include a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

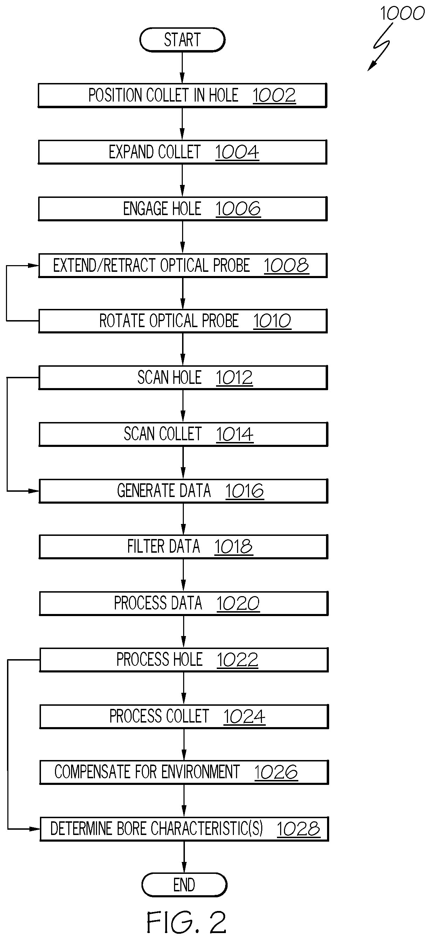

As illustrated in Figs. 1, 3-7 and 13, in one or more examples, the system 100 includes a measuring tool 102 and a controller 104. The measuring tool 102 is configured to measure the hole 300 and generate data 110 representing the hole 300 and, more particularly, representing the wall 302 of the hole 300. The controller 104 is in communication with the measuring tool 102. The controller 104 is configured to determine at least one of the bore characteristics 200 based on the data 110 from the measuring tool 102. The system 100 is operable to measure and inspect the hole 300 in the part 310 and determine the bore characteristics 200 of the hole 300. In one or more examples, the system 100 is operable to compensate for the effects of various environmental conditions 252. The controller 104 is configured (e.g., adapted or programmed) to perform various operational functions corresponding to data processing and analysis steps of the method 1000 (Figs. 2, 20 and 21).

As illustrated in Fig. 1, 3, 4 and 13, in one or more examples, the measuring tool 102 includes an optical probe 114 and a probe drive 116. The optical probe 114 is configured to be positioned within the hole 300. The optical probe 114 is configured scan the wall 302 of the hole 300 and, more particularly, the first wall 316 of the first hole 304 and the second wall 318 of the second hole 306. The optical probe 114 is configured to generate the data 110 representing the hole 300 (e.g., at least a portion of the wall 302 of the hole 300). The probe drive 116 is configured to translate and rotate the optical probe 114 within the hole 300. In these examples, concurrent linear and rotational motion of the optical probe 114 by the probe drive 116 facilitates scanning any portion of the hole 300 or an entirety of the hole 300 during a single extension and retraction stroke of the optical probe 114, thereby decreasing measurement cycle time. Multiple extension and retraction strokes of the optical probe 114 provide increased measurement data, thereby increasing accuracy.

As illustrated in Figs. 1, 4 and 7, in one or more examples, the probe drive 116 includes a linear drive 132 and a rotary drive 134. The linear drive 132 positions the optical probe 114 along a scan axis 130. The rotary drive 134 positions the optical probe 114 about the scan axis 130. As an example, the linear drive 132 extends the optical probe 114 into the hole 300 and the rotary drive 134 rotates the optical probe 114 within the hole 300 to measure the wall 302 of the hole 300. Rotating the optical probe 114 while adjusting a depthwise position of the optical probe 114 within the hole 300 enables a 360-degree scan of the wall 302 of the hole 300 during a single stroke (e.g., extension and retraction) of the optical probe 114. In one or more examples, the probe drive 116 is configured to adjust the depthwise position (e.g., a position along the depth or length of the hole 300) of the optical probe 114. During measurement of the hole 300, measurements of the wall 302 of the hole 300 are taken at each of a plurality of depthwise positions.

As illustrated in Fig. 1, in one or more examples, the optical probe 114 includes or takes the form of a laser interferometer 120. In one or more examples, the optical probe 114 includes a fiber optic probe that is used for low-coherence interferometry (LCI). In one or more examples, the optical probe 114 is configured to emit optical energy and direct the optical energy at the wall 302 of the hole 300. In one or more examples, the optical probe 114 performs a scanning operation (e.g., LCI scanning) of the wall 302 of the hole 300 as it is extended and/or retracted within the hole 300 by the linear drive 132 and rotated within the hole 300 by the rotary drive 134 in order to acquire the data 110 representing the wall 302 of the hole 300. In one or more examples, the optical probe 114 operates as a conduit for optical energy, such as a fiber optic line, and optical energy proceeds to and from the controller 104 (e.g., via one or more of the umbilicals 106) for measurement and analysis by the controller 104.

As illustrated in Figs. 1, 3 and 13, in one or more examples, the controller 104 receives the data 110 from the optical probe 114. In one or more examples, the data 110 is stored in memory 194. The data 110 is used by the controller 104 to generate a three-dimensional point cloud 150 (e.g., a digital 3D model) representing the hole 300. In one or more examples, the controller 104 is configured to determine various characteristics and/or parameters of the hole 300 and/or the wall 302, referred to herein as the bore characteristics 200, based on the data 110. In one or more examples, the controller 104 includes a processor 192, the memory 194, and program code 196 stored on the memory 194. In one or more examples, the controller 104 is implemented as custom circuitry, as a hardware processor executing programmed instructions stored in memory, or some combination thereof.

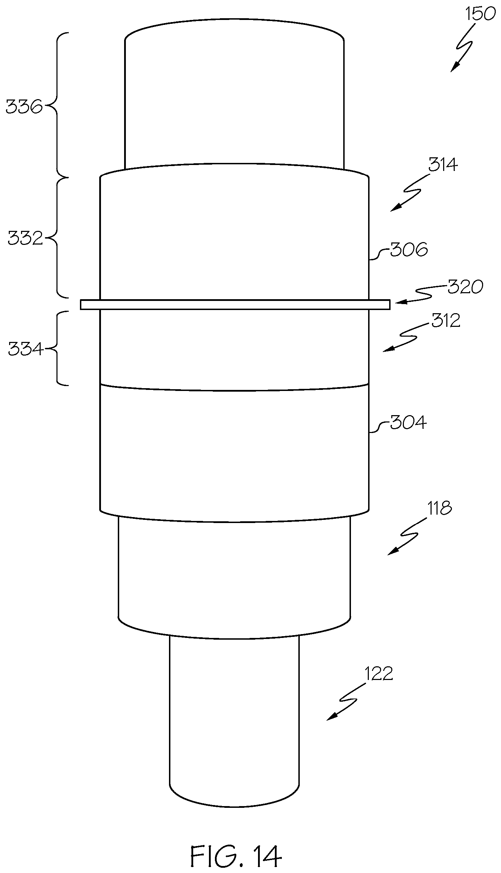

As illustrated in Figs. 1 and 14, in one or more examples, the controller 104 is configured, adapted, or programmed to generate a three-dimensional point cloud 150 based on the data 110 provided by the measuring tool 102. The three-dimensional point cloud 150 includes XYZ-coordinates 152 and reflective intensity 154 for at least a portion of the wall 302 of the hole 300. In one or more examples, the controller 104 is configured, adapted, or programmed to process and analyze the three-dimensional point cloud 150 to determine one or more of the bore characteristics 200. In one or more examples, the three-dimensional point cloud 150 includes XYZ-coordinates 152 and reflective intensity 154 for at least a portion of the collet 118 positioned in the hole 300. In these examples, the controller 104 is configured, adapted, or programmed to perform a transformation of the three-dimensional point cloud 150 with a known geometry (e.g., model 156) of the collet 118. The controller 104 is configured, adapted, or programmed to then determine at least one of the bore characteristics 200 based on the three-dimensional point cloud 150 as fit to the model 156 of the collet 118.

Fig. 14 illustrates an example of the three-dimensional point cloud 150 generated by the controller 104 using the data 110 provided by the measuring tool 102 (e.g., the optical probe 114). In one or more examples, the three-dimensional point cloud 150 includes a plurality of data points, each data point including an XYZ-coordinate 152 and a reflective intensity 154 representative of a point on the wall 302. In the illustrated example, the three-dimensional point cloud 150 represents the first hole 304 of the first component 312, the second hole 306 of the second component 314, and an interface 320 between the first component 312 and the second component 314. The data points of the three-dimensional point cloud 150 are processed and analyzed by the controller 104 for determining the various bore characteristics 200. In one or more examples, the three-dimensional point cloud 150 also includes data points, each including the XYZ-coordinate 152 and reflective intensity 154 representative of a point on the inner surface of the collet 118.

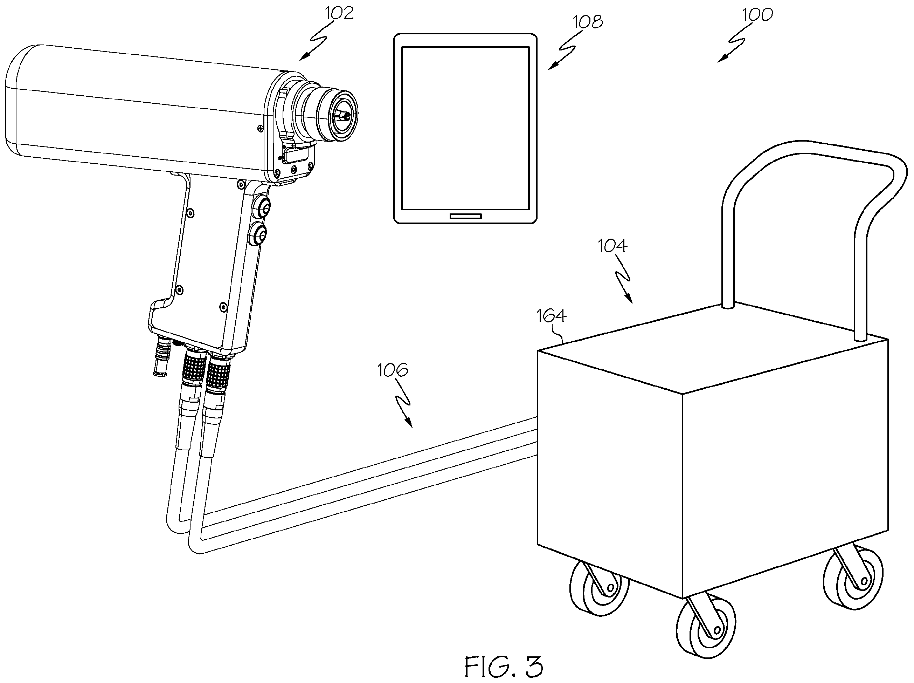

As illustrated in Figs. 1 and 3, in one or more examples, the system 100 includes a user interface 108. The user interface 108 is in communication (e.g., wireless or wired) with the controller 104. The user interface 108 is configured to visually display the at least one of the bore characteristics 200. In one or more examples, the controller 104 is configured to generate a report based on the data 110 and/or analysis of the three-dimensional point cloud 150. The report indicates the various bore characteristics 200 and is displayed to the operator using the user interface 108. In one or more examples, the user interface 108 displays a visual representation of the hole 300 (e.g., the three-dimensional point cloud 150 shown in Fig. 14).

As illustrated in Figs. 1 and 4-8, in one or more examples, the linear drive 132 includes at least one of a motor 142, a transmission 144, a pair of limiting switches 146, and an encoder 148. The transmission 144 transfers motion from the motor 142 to the optical probe 114. The pair of limiting switches 146 limit linear motion of the optical probe 114 along the scan axis 130. The encoder 148 measures the linear position of the optical probe 114 along the scan axis 130.

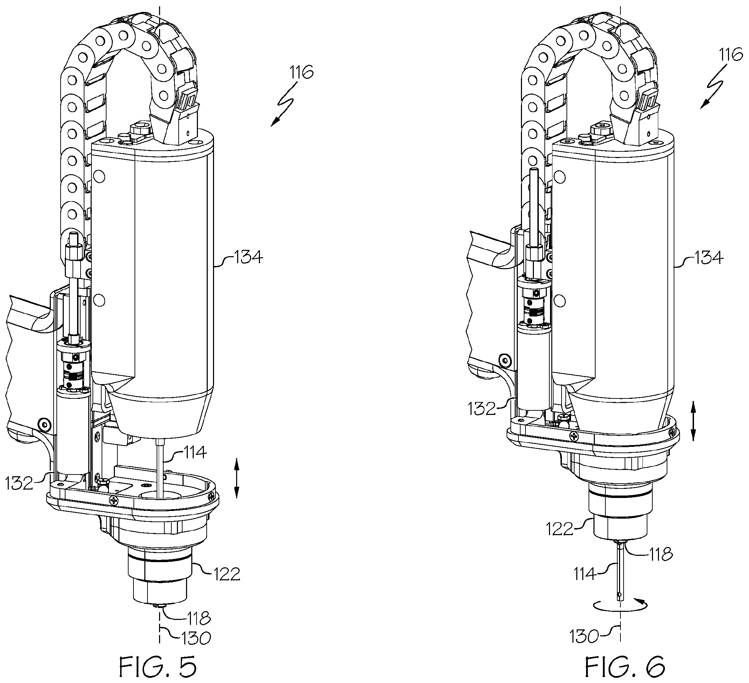

As illustrated in Figs. 5-8. in one or more examples, the motor 142 includes one of a direct current (DC) motor, a linear actuator, or other device configured to drive the optical probe 114 from the measuring tool 102 into the hole 300 of the part 310 and position the optical probe 114 along the scan axis 130. In one or more examples, during inspection of the hole 300, the optical probe 114 extends outward through the barrel of the housing 112 and through the collet 118. The transmission 144 is coupled to the motor 142, such as by a flexible coupling. In one or more examples, the transmission 144 includes a worm drive, a lead screw, or other mechanism configured to transfer motion from the motor 142 to the optical probe 114. In one or more examples, the rotary drive 134 is coupled to the linear drive 132, such as by a linear rail and cars. In these examples, the linear drive 132 is configured for linearly moving (e.g., translating) the rotary drive 134 along the scan axis 130 (e.g., as shown in Figs. 5 and 6). In one or more examples, the optical probe 114 is coupled to the rotary drive 134. In one or more examples, the rotary drive 134 is configured for rotating the optical probe 114 about the scan axis 130 (e.g., as shown in Fig. 6). In one or more examples, the rotary drive 134 and the optical probe 114 are integrated into a unitary functional component, such as a rotation probe commercially available from Novacam Technologies Inc. of Quebec, Canada. In one or more examples, the limiting switches 146 are magnetic proximity switches that detect the linear position of the optical probe 114 or the linear drive 132. In one or more examples, the limiting switches 146 provide a signal to the controller 104 indicating that the linear drive 132 or the optical probe 114 has reached a limit of extension or retraction. In one or more examples, the encoder 148 includes or takes the form of a magnetic encoder (e.g., Renishaw magnetic encoder) that detects changes in the magnetic field of a scale to determine position and motion of the optical probe 114.

As illustrated in Figs. 1, 4 and 9-11, in one or more examples, the measuring tool 102 includes a housing 112. In one or more examples, the measuring tool 102 takes the form of a hand tool configured for operation by a technician. In one or more examples, the housing 112 includes a barrel and a handle. In one or more examples, the measuring tool 102 includes a collet 118. The collet 118 is coupled to the housing 112. The collet 118 is configured to selectively engage and release a portion of the hole 300. During use of the measuring tool 102 for scanning the hole 300, the optical probe 114 extends through the collet 118. In one or more examples, with the collet 118 inserted within the hole 300, the collet 118 is configured to radially expand into contact engagement with the wall 302 of the hole 300. Radial expansion of the collet 118 secures the measuring tool 102 at a fixed position within the hole 300 while the optical probe 114 is extended into and retracted from the hole 300 to scan the wall 302 of the hole 300. Radial contraction of the collet 118 releases the measuring tool 102 from the hole 300.

In other examples, the measuring tool 102 is integrated into an end effector of a fully automated robot or a partially automated robot (e.g., cobot). In these examples, the measuring tool 102 includes substantially the same operational components described and illustrated herein.

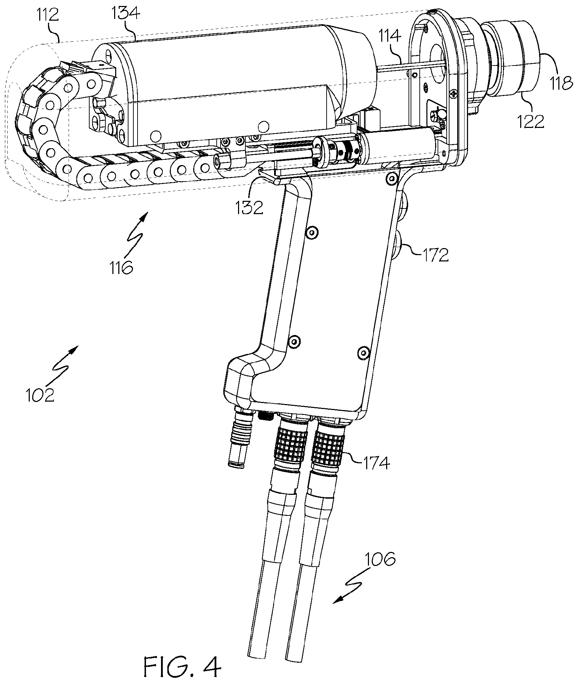

As illustrated in Fig. 4, in one or more examples, the measuring tool 102 includes a trigger 172 located on the handle of the housing 112. The trigger 172 enables actuation and control of the measuring tool 102, such as control of the optical probe 114, the probe drive 116, and the collet 118. In one or more examples, the trigger 172 includes two or more triggers or switches that control individual operational components, features, or functions of the measuring tool 102. In one or more examples, the measuring tool 102 includes one or more ports 174 configured for connecting to the umbilicals 106. In one or more examples, pressing the trigger 172 (e.g., a first trigger or switch) is configured to actuate or activate the actuator 126 that extends the mandrel 124 and expands the collet 118 within the hole 300. This causes the collet 118 to grip the hole 300. In one or more examples, the mandrel 124 is biased in a retracted position, such as by an internal spring. In these examples, releasing the trigger 172 enables the mandrel 124 to return to the retracted position and contracts the collet 118. In one or more examples, pressing the trigger 172 (e.g., a second trigger or switch) is configured to actuate the probe drive 116 for extending the optical probe 114 into the hole 300, rotating the optical probe 114 within the hole 300, and emitting the optical energy for scanning the wall 302 of the hole 300.

As illustrated in Figs. 1, 9 and 10, in one or more examples, the measuring tool 102 includes at least one of a sleeve 122, a mandrel 124, and an actuator 126. The sleeve 122 couples the collet 118 to the housing 112. In one or more examples, the sleeve 122 provides a threaded connection to the housing 112 of the measuring tool 102. In one or more examples, the sleeve 122 includes a hollow, tubular body. With the sleeve 122 coupled to the housing 112, the sleeve 122 is configured to clamp and secure the collet 118 to the housing 112 within the tubular body of the sleeve 122. The mandrel 124 linearly moves (e.g., is configured to move) relative to the collet 118 to expand the collet 118. The actuator 126 positions the mandrel 124 relative to the collet 118. In these examples, extension of the mandrel 124 radially expands the collet 118 (e.g., increases the diameter of the collet 118) and retraction of the mandrel 124 radially contracts the collet 118 (e.g., returns the collet 118 to an unexpanded state). In one or more examples, the actuator 126 includes an actuator housing that is coupled to the housing 112 of the measuring tool 102. In one or more examples, the actuator 126 includes a piston (e.g., a pneumatic piston) disposed within the actuator housing. In these examples, the mandrel 124 is coupled to the piston. In one or more examples, the actuator 126 also includes a spring and spring pre-load lock nut that transfers motion from the piston to extension of the mandrel 124 for radial expansion of the collet 118 and biases (e.g., automatically returns) the mandrel 124 back to a retracted position for radial contraction of the collet 118.

As illustrated in Fig. 11, in one or more examples, during operation of the measuring tool 102 for measuring the hole 300, a portion of the collet 118 is inserted in the hole 300. In one or more examples, the sleeve 122 is configured to contact a surface of the first component 312 surrounding the hole 300.

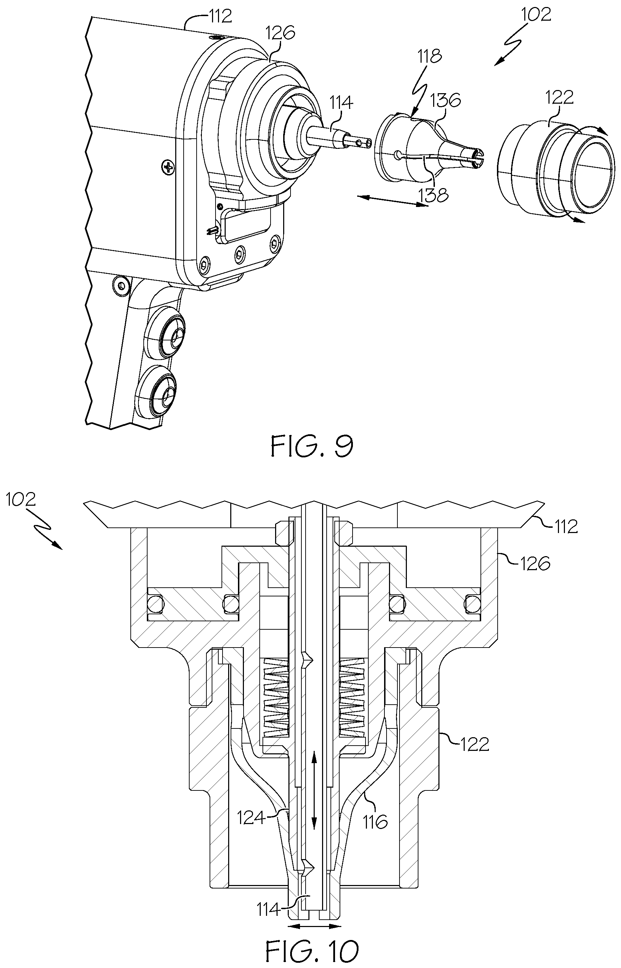

As illustrated in Figs. 9 and 12, in one or more examples, the collet 118 includes a body 136 and a slit 138 extending along a portion of the length of the body 136. The body 136 is tubular and tapered. The slit 138 enables the tubular body 136 to expand upon the mandrel 124 moving into the tapered portion of the body 136. In one or more examples, the measuring tool 102 includes a plurality of collets 128. Each of the collets 128 is configured to be interchangeably coupled to the housing 112. In one or more examples, each one of the collets 128 includes a different geometry or contracted diameter corresponding to holes 300 having different diameters.

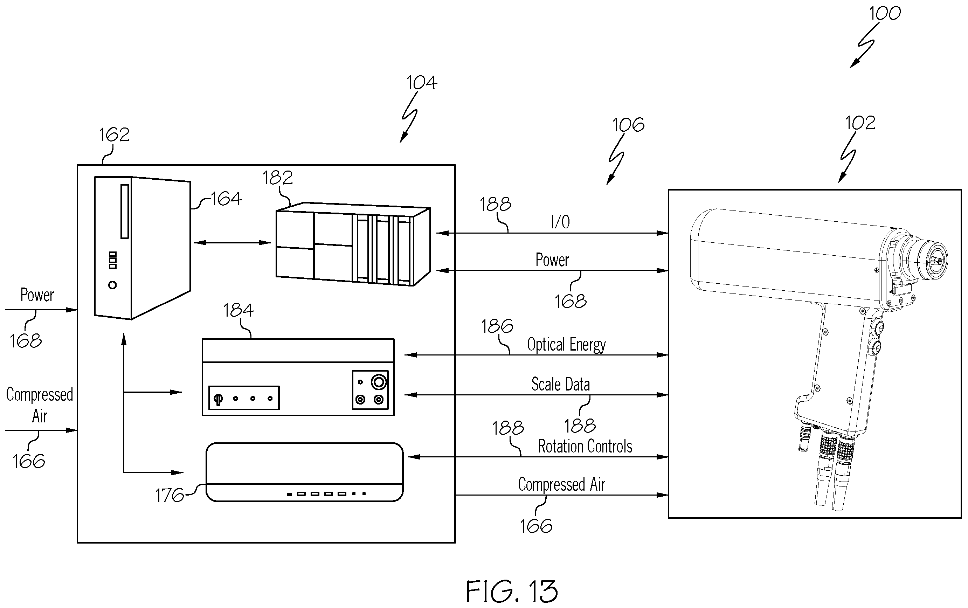

As illustrated in Figs. 3 and 13, in one or more examples, the measuring tool 102 is coupled to and is in communication with the controller 104 via a plurality of umbilicals 106. In one or more examples, the controller 104 includes or takes the form of a cart 162 that is coupled to the measuring tool 102 by the umbilicals 106. In these examples, the system 100 includes one or more of a pressure system, a power system, and/or a communication system, which are housed within the cart and controlled by the controller 104. As such, in these examples, power, pressure (e.g., pneumatic), and commands (e.g., instructions) are transferred to the measuring tool 102 via the umbilicals 106. In other examples, wireless communication technologies, such as protocols for wireless networking or Bluetooth communications, may be implemented to facilitate communications between the measuring tool 102 and the controller 104.

As illustrated in Fig. 13, in one or more examples, coupling the tool 102 to the cart 162 via the umbilicals 106 beneficially reduces the bulk of the tool 102 and enables other functional components of the system 100, such as a server 164 (FIG. 14), a pressure system (e.g., via compressed air line 166), an electrical power supply (e.g., via power line 168), and/or other components to be integrated into the cart 162. In one or more examples, the controller 104 receives electrical power via the power line 168. In one or more examples, the controller 104 is coupled with a pressurized air supply (e.g., shop air) via the compressed air line 166 at pneumatic pressure. In one or more examples, the umbilicals 106 include compressed air line 166 that provides the pneumatic pressure, power line 168 that provides electrical power, one or more data line 188 that provides input and output (I/O) instructions and/or the exchange of data with a programmable logic controller 182. In one or more examples, the umbilicals 106 include a fiber optic line 186 that conveys optical energy between an interferometer 184 and the measuring tool 102 (e.g., the optical probe 114). In one or more examples, the umbilicals 106 include data line 188 that conveys scale data between the interferometer 184 and the measuring tool 102 (e.g., encoder 148). In one or more examples, the umbilicals 106 include data line 188 that conveys rotational controls between a rotation controller 176 and the measuring tool 102 (e.g., the rotary drive 134).

In one or more examples, the controller 104 includes a data processing system (e.g., a computer), such as in the form of the server 164 or other suitable computing device. In one or more examples, the controller 104 includes a display (e.g., a screen, touchscreen, etc.). In other examples, the user interface 108 takes the form of a tablet computer or other mobile device that incorporates the display. In one or more examples, the server 164 processes input (e.g., data 110) from the interferometer 184 via a data line to determine measurements and to correlate measurements with data received from the programmable logic controller 182 over a data line.

As illustrated in Figs. 1 and 15-19, in one or more examples, one or more of the bore characteristics 200 is determined based on the data 110 (e.g., three-dimensional point cloud 150) representing the hole 300. In one or more examples, the bore characteristics 200 include at least one of a diameter 202 of the hole 300, an offset 204 of the hole 300, a gap 322 at the interface 320 of the hole 300, a length 208 (e.g., depth) of the hole 300, a bore straightness 212 of the hole 300 (e.g., based on a central bore angle), a bore orientation 214 of the hole 300 (e.g., based on a central bore angle), a smoothness 216 of the hole 300, debris 326 at the interface 320 of the hole 300, and sealant 324 at the interface 320 of the hole 300. In other examples, the bore characteristics 200 also include at least one of a diameter of a countersink situated at one end of the hole 300, a central bore angle (e.g., straightness) of the countersink, and depth (e.g., length) of the countersink (e.g., at the entry or exit layer of the part 310.

In one or more examples, the optical probe 114 is inserted into the hole 300 and moves linearly along the scan axis 130 and rationally about the scan axis 130 to scan or otherwise measure the wall 302 of the hole 300 at multiple depthwise positions. In one or more examples, the optical probe 114 measures distances (e.g., to the wall 302 of the hole 300 and/or to the inner surface of the collet 118) at each of the plurality of depthwise positions. In one or more example, the distances are represented as the XYZ-coordinates 152 (e.g., of points on the wall 302 of the hole 300 and/or the inner surface of the collet 118). In one or more examples, the optical probe 114 also measures the reflective intensity 154 at each of the plurality of depthwise positions (e.g., of points on the wall 302 of the hole 300 and/or the inner surface of the collet 118).

Fig. 15 schematically illustrates an example of the part 310 in which the gap 322 exists at the interface 320 between the first component 312 and the second component 314 (e.g., at the interface between the first hole 304 and the second hole 306). As used herein, a gap at an interface (interface gap) includes any empty space at an interface between two or more components of a part. Depending on the part 310, there may be no gaps 322 that the interface 320 (e.g., interference gaps). In one or more examples, the gap 322 is uniform in thickness or tapered within the purview of the hole 300. In one or more examples, when one of the depthwise positions of the gap 322 is reached, the measurements from the optical probe 114 will deviate from measurements acquired at other depthwise positions for the wall 302 of the hole 300.

Fig. 16 schematically illustrates an example of the part 310 in which the offset 206 exists between the first hole 304 and the second hole 306 (e.g., between a first central bore axis of the first hole 304 and second central bore axis of the second hole 306). As used herein an offset includes any non-coaxial relationship between or any non-coincidence of the first central bore axis of the first hole 304 and second central bore axis of the second hole 306 or situations in which an interface surface of one of the components extends beyond a boundary of the wall 302 of the hole 300 when viewed along a bore axis of the hole 300. Depending on the part 310, there may be no offset 206 between the holes forming the hole 300. In one or more examples, measurements from the optical probe 114 at one or more of the depthwise positions for the wall 302 of the hole 300 that deviate from measurements acquired at other depthwise positions for the wall 302 of the hole 300 can be indicative of existence of the offset 206.

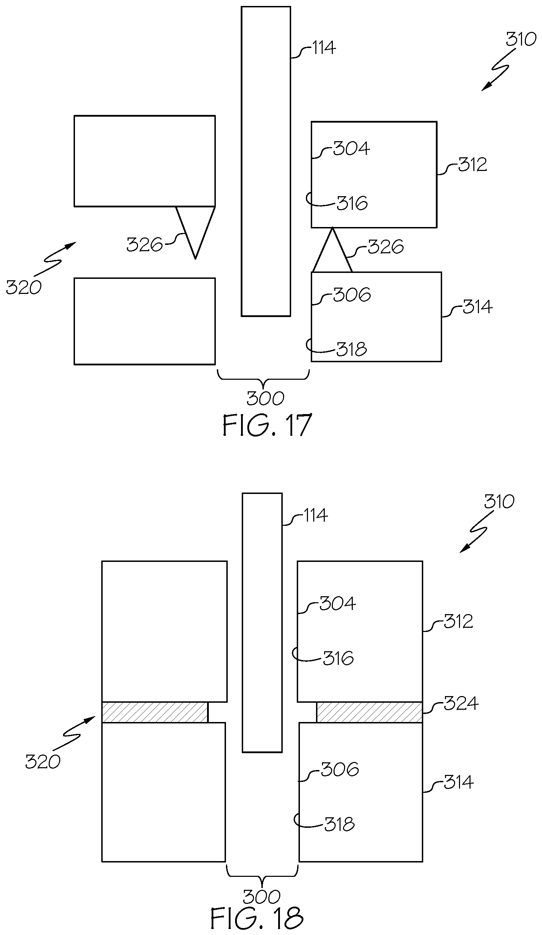

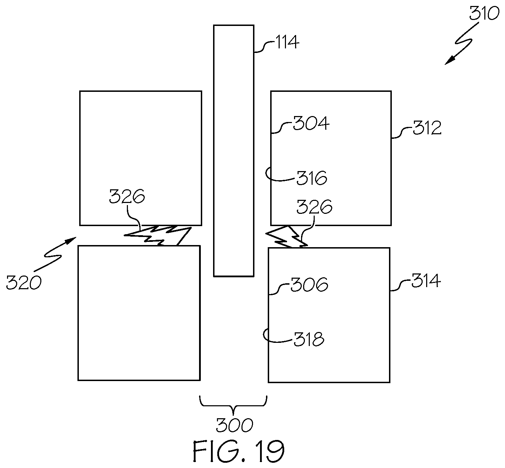

Figs. 17 and 19 schematically illustrate examples of the part 310 in which debris 326 (e.g., foreign object debris of FOD) exists that the interface 320 of the hole 300. Depending on the part 310, there may be no debris 326 at the interface 320. In one or more examples, thresholding may be performed for the measurements in order to infer the presence of the debris 326. If a measurement is beyond a threshold value, this may be indicative of the presence of the debris 326. These operations may be performed based on a comparison between actual and expected measurements from the optical probe 114. Examples of the debris 326 can include a burr at the interface 320 (e.g., Fig. 17), chips trapped at the interface 320 (e.g., Fig. 19), or other FOD at the interface 320.

Fig. 18 schematically illustrates an example of the part 310 in which sealant 324 exists that the interface 320 of the hole 300. Depending on the part 310, there may be no sealant 324 at the interface 320. In one or more examples, thresholding may be performed for the measurements in order to infer the presence of the sealant 324. If a measurement is beyond a threshold value, this may be indicative of the presence of the sealant 324. These operations may be performed based on a comparison between actual and expected measurements from the optical probe 114. An example of the sealant 324 is a fay sealant applied between fay surfaces of the components of the part 310. In some instances, a portion of the sealant 324 may not reach the hole 300. In other instances, a portion of the sealant 324 may squeeze into the hole 300.

Referring now to Figs. 1 and 3-19, by way of examples, present disclosure is also directed to the measuring tool 102 for measuring the hole 300. The following are examples of the measuring tool 102, according to the present disclosure. In one or more examples, the measuring tool 102 is implemented using or forms a portion of the system 100 (Figs. 1, 3 and 13). Examples of the measuring tool 102 include a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

As illustrated in Figs. 1 and 3-13, in one or more examples, the measuring tool 102 includes the housing 112, the collet 118, the optical probe 114, the linear drive 132, and the rotary drive 134. The collet 118 is coupled to the housing 112 and is configured to engage a portion of the hole 300. The optical probe 114 is configured to extend through the collet 118 and into the hole 300. The optical probe 114 is configured to scan the wall 302 of the hole 300. The optical probe 114 is configured to generate the data 110 representing the wall 302 of the hole 300. The linear drive 132 positions the optical probe 114 along the scan axis 130. The rotary drive 134 positions the optical probe 114 about the scan axis 130. In one or more examples, the measuring tool 102 includes one or more of the actuator 126, the mandrel 124, the sleeve 122, the trigger 172, the ports 174, the motor 142, the transmission 144, the limiting switches 146, the encoder 148, and any other functional component, element, or feature as described herein and illustrated in reference to the system 100.

Referring now to Fig. 2, by way of examples, present disclosure is further directed to a method 1000 for determining the bore characteristics 200 of the hole 300. the following are examples of the method 1000, according to the present disclosure. In one or more examples, the method 1000 is implemented using the system 100 and/or the measuring tool 102 (Fig. 1). Examples of the method 1000 include a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

In one or more examples, the method 1000 includes a step of positioning 1002 a portion of the collet 118 in the hole 300. In one or more examples, the method 1000 includes a step of expanding 1004 the collet 118. In one or more examples, the method 1000 includes a step of engaging 1006 the wall 302 of the hole 300 with the collet 118. In one or more examples, the method includes a step of extending and/or retracting 1008 the optical probe 114 into the hole 300 along the scan axis 130. The method 1000 includes a step of rotating 1010 the optical probe 114 within the hole 300 about the scan axis 130. In one or more examples, the step of extending and/or retracting 1008 and the step of rotating 1010 are performed concurrently, sequentially, or intermittently depending on the portion of the wall 302 of the hole 300 to be measured and/or the amount of measurements to be taken. In one or more examples, the method 1000 includes a step of scanning 1012 the wall 302 of the hole 300. In one or more examples, the method 1000 includes a step of scanning 1014 a portion of the collet 118 disposed within the hole 300. In one or more examples, the step of scanning 1014 includes performing laser interferometry. In one or more examples, the method 1000 includes a step of generating 1016 the data 110. In one or more examples, the data 110 includes data representing the wall 302 of the hole 300. In one or more examples, the data 110 includes data representing the inner surface of the collet 118. In one or more examples, the method 1000 includes a step of filtering 1018 some portion of the data 110 to remove outlier data points or noise. In one or more examples, the method 1000 includes a step of processing 1020 the data 110. In one or more examples, the step of processing 1020 the data 110 includes a step of generating the three-dimensional point cloud 150. In one or more examples, the method 1000 includes a step of processing 1022 the hole 300 using the data 110. In these examples, the data 110 is used to generate the three-dimensional point cloud 150, which includes XYZ-coordinates 152 and reflective intensity 154 of the wall 302 of the hole 300. In one or more examples, the method 1000 includes a step of processing the collet 118 using the data 110. In these examples, the data 110 is used to generate the three-dimensional point cloud 150, which includes XYZ-coordinates 152 and reflective intensity 154 of the inner surface of the collet 118. In one or more examples, the method 1000 includes a step of compensating 1026 for environment (e.g., environmental conditions 252). In these examples, three-dimensional point cloud 150 is transformed or otherwise modified using a known geometry (e.g., model 156) of the collet 118. In one or more examples, the method 1000 includes a step of determining 1028 at least one of the bore characteristics 200 based on the data 110.

In one or more examples, according to the method 1000, the step of determining 1028 includes determining at least one of the diameter 202 of the hole 300, the offset 204 of the hole 300, the gap 322 at the interface 320 of the hole 300, the length 208 of the hole 300, the bore straightness 212, the bore orientation 214, the smoothness 216 of the hole 300, debris 326 at the interface 320, and sealant 324 at the interface 320.

In one or more examples, the step of compensating 1026 for environmental conditions 252 taking a measured diameter of the collet 118 and subtracting the known diameter of the collet 118 to get a diameter offset. This diameter offset is subtracted from the measured diameter of the hole 300, as determined by the method 1000. In these examples, the resulting diameter is used as the compensated diameter for the hole 300. In some cases, various environmental conditions, such as temperature, humidity, atmospheric pressure, and the like can affect the measured results of the optical probe 114 (e.g., the data). This compensation step accounts for variations in environment and essentially zeros out the measurements using the collet 118 each time the system 100 is used to measure a hole.

In one or more examples, according to the method 1000, the step of processing 1020 the data 110, such as the step of processing 1022 and/or step of processing 1024 the collet 118, includes a step of performing a dynamic starting origin operation and a step of further performing a coordinate solving operation.

In one or more examples, the testing method includes capturing the three-dimensional point cloud 150, including the XYZ-coordinates 152 and the reflective intensity 154 of a multilayered stack up to determine a lateral mismatch (e.g., offset 204) between the center of the first hole 304 and the center of the second hole 306. In one or more examples, the diameter 202 of the hole 300 is determined. In one or more examples, existence of the gap 322 is determined. In one or more examples, the method 1000 utilizes a dynamic starting origin method 2000 and a coordinate solving method 3000. In one or more examples, the dynamic starting origin method 2000 is implemented using an algorithm embodied by a dynamic starting origin module 362 stored on the memory 194 and executed by the processor 192 of the controller 104. In one or more examples, the coordinate solving method 3000 is implemented using an algorithm embodied by a coordinate solver module 364 stored on the memory 194 and executed by the process or 192 of the controller 104.

Generally, the dynamic starting origin method 2000 is used to find a rough estimate of first (e.g., top) and second (e.g., bottom) layer cylinders representing the first hole 304 and the second hole 306. After this rough estimate has been found, the coordinate solving method 3000 is used to determine the best fitting cylinders for the given three-dimensional point cloud 150. The importance of the dynamic starting origin method 2000 is because prominent artifacts exist in the point cloud. These artifacts, namely the radially expanding collet 118 provide comparably strong features that interfere with the features of the hole 300. This allows preservation of the artifacts without the artifacts affecting result processing. Additionally, finding the interface, diameter, and a rough X/Y origin for each layer significantly decreases the time required for the coordinate solver to function, which decreases the processing time significantly. The dynamic starting origin method 2000 breaks the cylinder into several sections. The sections create smaller cylinders, and an average X, Y, Z, Radius, and Intensity value is found for each of the sections. A portion of the lower part of the scan can be ignored, which is the region in which the collet 118 exists. The section in which the average intensity value is lowest is determined to be the location of the interface 320. The sections are organized between above and below the interface. The averages of the X/Y positions are used for the default origins of the top and bottom layer. The median radius of the cylinders is used as the radius of the top and bottom layer. In one or more examples, the angular orientation of the bore center axis (e.g., the A and B angles) of the cylinders (e.g., first hole 304 and second hole 306) are defaulted to 0 degrees. The results from dynamic starting origin method 2000 include the X/Y origin, interface height, radius, and A/B angles. The results are then sent to the coordinate solver.

In one or more examples, the coordinate solving method 3000 takes the starting origin values (e.g., results from the dynamic starting origin method 2000) and searches for a range of possible values that optimizes a cylinder fitting function. The cylinder fitting function is designed so that it will report a better score the more points go through a given cylinder. The coordinate solver operates by creating a population of potential candidates of cylinders that are all the same except one parameter for each cylinder differs. The solver uses a fitness function to determine which of those candidates is the best one, and the parameter that is the best is selected and overwrites the starting origin value for the cylinder. The coordinate solving method 3000 moves to the next parameter and repeats this process. Once all the parameters have been varied, the coordinate solving method 3000 checks to see if the result has converged. If it hasn't, the coordinate solving method 3000 repeats the process and varies the parameters by a different amount. Once the solution has converged, the result's mismatch and diameter are reported.

In one or more examples, the results are displayed on the user interface 108 and the operator can select the scan details to view the point cloud and the cylinders that were found. In one or more examples, the scan (e.g., the three-dimensional point cloud 150) has two different views: distance (e.g., XYZ-coordinates 152) and intensity (e.g., reflective intensity 154). The distance view shows how far away each point is from the resulting cylinder. The intensity view shows the intensity of each point.

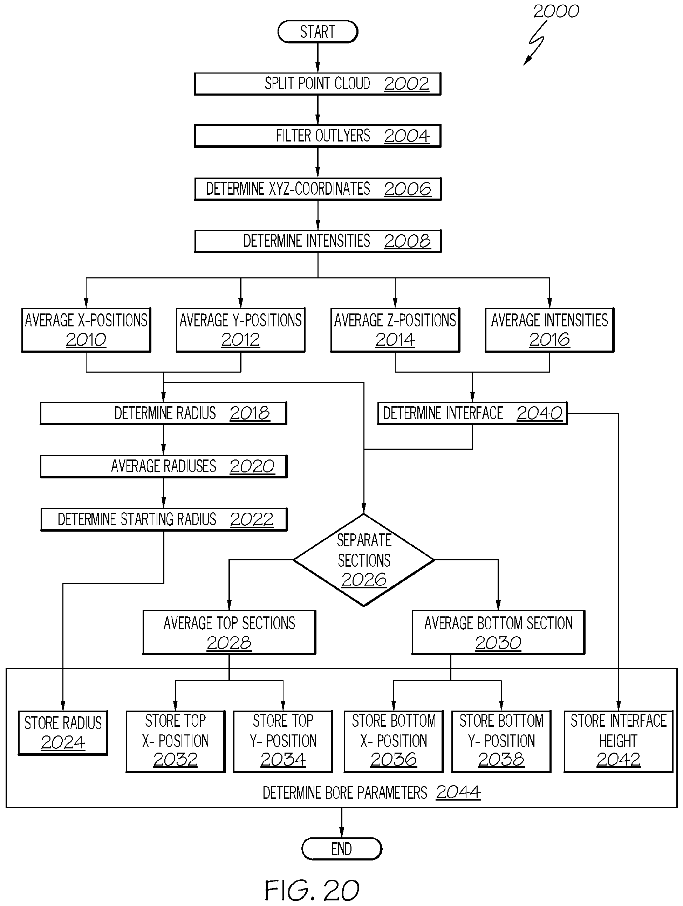

Fig. 20 illustrates an example of the dynamic starting origin method 2000. In one or more examples, the dynamic starting origin method 2000 represents one or more operational steps of the method 1000 (Fig. 2), such as the step of processing 1020. In one or more examples, the dynamic starting origin method 2000 is implemented using the controller 104 of the system 100. Examples of the dynamic starting origin method 2000 include a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

In one or more examples, the dynamic starting origin method or operation, referred to herein as method 2000, includes a step of splitting 2002 the three-dimensional point cloud 150 into a plurality of sections. In one or more examples, the three-dimensional point cloud 150 is split into any number (e.g., n) of sections. In one or more examples, each one of the sections of the three-dimensional point cloud 150 spans an at least approximately equal span of distance in the Z-direction or along the Z-axis.

In one or more examples, the method 2000 includes a step of filtering 2004 outliers (e.g., noise 336 in Fig. 14). In one or more examples, the outliers represent noise or artifacts that do not represent the hole 300. In one or more examples, a portion (e.g., percentage) of the sections the three-dimensional point cloud 150 starting at the lower Z-values are removed from the three-dimensional point cloud 150. This step removes the artifacts not representing the hole 300, such as data point representing the collet 118 and the sleeve 122.

In one or more examples, the method 2000 includes a step of determining 2006 XYZ-coordinates 152 (e.g., XYZ-positions) for each one of the data points of the three-dimensional point cloud 150. In one or more examples, the method 2000 includes a step of determining 2008 the reflective intensity 154 for each one of the data points of the three-dimensional point cloud 150. In one or more examples, the method 2000 includes a step of averaging 2010 the X-positions (e.g., X-coordinates). In one or more examples, the X-positions of all the data points of the three-dimensional point cloud 150 are averaged and an X-average is determined for each section of the three-dimensional point cloud 150.

In one or more examples, the method 2000 includes a step of averaging 2012 the Y-positions (e.g., Y-coordinates). In one or more examples, the Y-positions of all the data points of the three-dimensional point cloud 150 are averaged and a Y-average is determined for each section of the three-dimensional point cloud 150. In one or more examples, the method 2000 includes a step of averaging 2014 the Z-positions (e.g., Z-coordinates). In one or more examples, the Z-positions of all the data points of the three-dimensional point cloud 150 are averaged and a Z-average is determined for each section of the three-dimensional point cloud 150. In one or more examples, the method 2000 includes a step of averaging 2016 the reflective intensities 154. In one or more examples, the reflective intensities 154 of all the data points of the three-dimensional point cloud 150 are averaged and an I-average (intensity average) is determined for each section of the three-dimensional point cloud 150.

In one or more examples, the method 2000 includes a step of determining 2018 radiuses of each section. In one or more examples, the X-average and the Y-average are used to from or define a center of each section. The distance between the center of the section and each point of the section is determined. Each determined distance becomes the radius corresponding to the point of the section of the three-dimensional point cloud 150. In one or more examples, the method 2000 includes a step of averaging 2020 the radiuses. In one or more examples, the radiuses of the points are averaged for each section and an R-average (radius average) is determined for each section of the three-dimensional point cloud 150. In one or more examples, the method 2000 includes a step of determining 2022 a starting average (average radius). In one or more examples, the median of the R-averages of the sections is determined. The determined median is used as the starting radius of a corresponding section of the three-dimensional point cloud 150. In one or more examples, the starting radius is stored 2024 as one of the bore parameters determined 2044 by the method 2000.

In one or more examples, the method 2000 includes a step of separating 2026 the sections. In one or more examples, each one of the sections of the three-dimensional point cloud 150 is separated into a top stack 332 (e.g., stack of top sections in Fig. 14) and a bottom stack 334 (e.g., stack of bottom sections in Fig. 14). In one or more examples, the top stack includes a number of sections that represent the first component 312 and the first hole 304. In one or more examples, the bottom stack includes a number of sections that represent he second component 314 and the second hole 306. In one or more examples, the method 2000 includes a step of averaging 2028 the top stack of sections. In one or more examples, the X-averages and the Y-averages of the top sections are averaged and a top X-average (e.g., average X-coordinate or position) and a top Y-average (e.g., average Y-coordinate or position) are determined. In one or more examples, the method 2000 includes a step of averaging 2030 the bottom stack of sections. In one or more examples, the X-averages and the Y-averages of the bottom sections are averaged and a bottom X-average (e.g., average X-coordinate or position) and a bottom Y-average (e.g., average Y-coordinate or position) are determined. In one or more examples, the top X-position is stored 2032 and the top Y-position is stored 2034 as bore parameters determined 2044 by the method 2000. In one or more examples, the bottom X-position is stored 2036 and the bottom Y-position is stored 2038 as bore parameters determined 2044 by the method 2000.

In one or more examples, the method 2000 includes a step of determining 2040 the interface (e.g., interface 320). In one or more examples, the section with the lowest I-average is identified. This section is used to identify or indicate the location of the interface. In one or more examples, the Z-average (e.g., average values of the Z-positions for the section with the lowest I-average) is used for this section is used as the starting Z-position for the interface. In one or more examples, the interface height is determined based on the Z-positions of the section with the lowest I-average. In one or more examples, the top and bottom stacks of sections are separated based on the Z-positions identifying the height of the interface (e.g., the top stack is above the interface and the bottom stack is below the interface). In one or more examples, the height of the interface is stored 2042 as bore parameters determined 2044 by the method 2000.

In one or more examples, the results (e.g., resulting bore parameters) determined by the method 2000 are provided as input parameters for the coordinate solving method 3000.

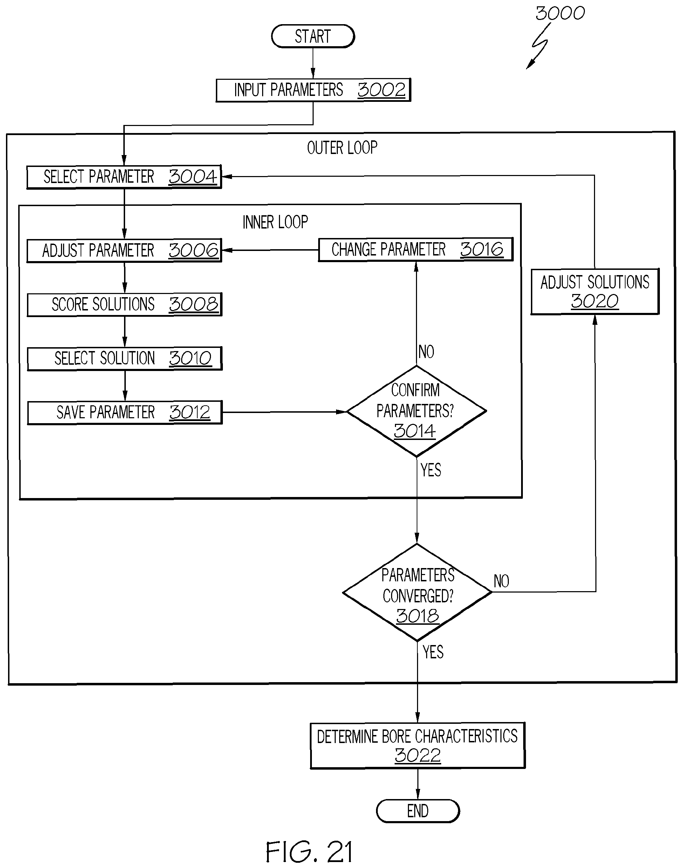

Referring to Figs. 2, 20 and 21, in one or more examples, the dynamic starting origin method and the coordinate solving method 3000 can also be used to determine the bore characteristics for the collet 118 (e.g., processing the collet 118) or can be an implementation of the step of processing 1024 the collet 118. In these examples, the operational steps described herein and illustrated in Figs. 20 and 21 can be applied to the collet 118.

Fig. 21 illustrates an example of the coordinate solving method 3000. In one or more examples, the coordinate solving method 3000 represents one or more operational steps of the method 1000 (Fig. 2), such as the step of processing 1020. In one or more examples, the coordinate solving method 3000 is implemented using the controller 104 of the system 100. Examples of the coordinate solving method 3000 include a number of elements, steps, operations, or processes. Nots all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

In one or more examples, the coordinate solving method or operation, referred to herein as method 3000, includes a step of inputting 3002 parameters. In one or more examples, the input parameters for the method 3000 include the resulting bore parameters determined by the method 2000. In one or more examples, the input parameters include some combination (e.g., one or more of) a radius of each section (e.g., top section representing the first hole 304 and the bottom section representing the second hole 306) of the three-dimensional point cloud 150, the top X-position, the top Y-position, the bottom X-position, the bottom Y-position, the interface height, the top first opening center point (top A), a top second opening center point (top B), a bottom first opening center point (bottom A), and a bottom second opening center point (bottom B).

In one or more examples, the method 3000 includes a step of selecting 3004 parameters. In one or more examples, one of the parameters (e.g., a first parameter, such as radius) is selected and set as the focus of the operation. In one or more examples, the method 3000 includes a step of adjusting 3006 the parameter. In one or more examples, the selected or focused parameter (e.g., first parameter) is adjusted by creating a number (e.g., one or more) of possible solutions. In one or more examples, the method 3000 includes a step of scoring 3008 the solutions. In one or more examples, each one of the possible solutions created is scored. In one or more examples, the method 3000 includes a step of selecting 3010 a solution. In one or mor examples, the parameter of the best scoring solution is selected and is saved 3012 as a new current parameter value.

In one or more examples, the method 3000 includes a step of confirming 3014 the parameters. In one or more examples, it is determined if all the parameters have been selected and focused (e.g., gone through the process steps 3006-3012). If all parameters have not been focused on, the method 3000 includes a step of changing 3016 the parameter. In one or more examples, a different parameter (e.g., second parameter, such as top X-position, third parameter, such as top Y-position, etc.) is selected for focus (e.g., the focus is changed to the next parameter) and the process steps 3006-3012 are repeated for each one of the parameters. If all parameters have not been focused on, the method 3000 includes a step of determining or checking 3018 if the parameters have converged. If the parameters have not converged, the method 3000 includes a step of adjusting 3020 the solutions. In one or more examples, the range of possible solutions is adjusted based on the differences between the current parameters and the previous parameters. If the parameters have converged, the method 3000 includes a step of determining 3022 the bore characteristics 200 using the current parameters, as adjusted and selected according to the method 3000.

In one or more examples, the controller 104 (Fig. 1) includes or takes the form of the data processing system. In one or more examples, the data processing system includes a communications framework, which provides communications between at least one processor 192, one or more storage devices, such as memory 194 and/or persistent storage, a communications unit, an input/output unit (I/O unit), and a display (e.g., user interface 108). In this example, the communications framework takes the form of a bus system. The processor 192 serves to execute instructions from software or other applications that can be loaded into the memory 194. In one or more examples, the processor 192 is a number of processor units, a multiprocessor core, or some other type of processor, depending on the particular implementation. The memory 194 and any persistent storage are examples of storage devices. A storage device is any piece of hardware that is capable of storing information, such as, for example, without limitation, at least one of data, program code in functional form, or other suitable information either on a temporary basis, a permanent basis, or both on a temporary basis and a permanent basis. The storage devices may also be referred to as computer readable storage devices in one or more examples. The memory 194 is, for example, a random-access memory or any other suitable volatile or non-volatile storage device. The persistent storage can take various forms, depending on the particular implementation. For example, the persistent storage contains one or more components or devices. For example, the persistent storage is a hard drive, a solid-state hard drive, a flash memory, a rewritable optical disk, a rewritable magnetic tape, or some combination of the above. The media used by the persistent storage also can be removable. For example, a removable hard drive can be used for the persistent storage. Instructions for at least one of the operating system, applications, or programs can be located in the storage devices, which are in communication with the processor 194 through the communications framework. The processes of the various examples and operations described herein can be performed by the processor 192 using computer-implemented instructions, which can be located in a memory, such as the memory 194. The instructions can be referred to as program code 196, computer usable program code, or computer readable program code that can be read and executed by the processor 192. The program code 196 in the different examples can be embodied on different physical or computer readable storage media, such as the memory 194 or the persistent storage.

In one or more examples, program code 196 is located in a functional form on computer readable media that is selectively removable and can be loaded onto or transferred to the data processing system for execution by the processor 192. In one or more examples, the program code 196 and computer readable media form a computer program product. In one or more examples, the computer readable media is computer readable storage media. In one or more examples, the computer readable storage media is a physical or tangible storage device used to store the program code 196 rather than a medium that propagates or transmits the program code 196. Alternatively, the program code 196 can be transferred to the data processing system using a computer readable signal media. The computer readable signal media can be, for example, a propagated data signal containing the program code 196. For example, the computer readable signal media can be at least one of an electromagnetic signal, an optical signal, or any other suitable type of signal. These signals can be transmitted over at least one of communications links, such as wireless communications links, optical fiber cable, coaxial cable, a wire, or any other suitable type of communications link.

Additionally, various components of the controller 104 and/or the data processing system may be described as modules or applications (e.g., dynamic starting origin module 362 and coordinate solver module 364). For the purpose of the present disclosure, the term "module" includes hardware, software, or a combination of hardware and software. As an example, a module can include one or more circuits configured to perform or execute the described functions or operations of the executed processes described herein (e.g., the method 1000, method 2000, and/or method 3000). As another example, a module includes a processor, a storage device (e.g., a memory), and computer-readable storage medium having instructions that, when executed by the processor causes the processor to perform or execute the described functions and operations. In one or more examples, a module takes the form of the program code 196 and the computer readable media together forming the computer program product.

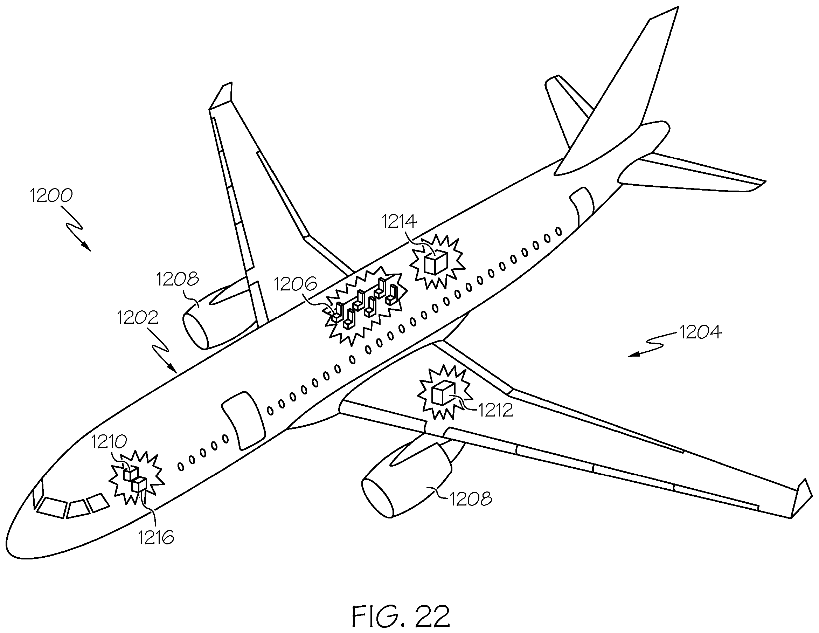

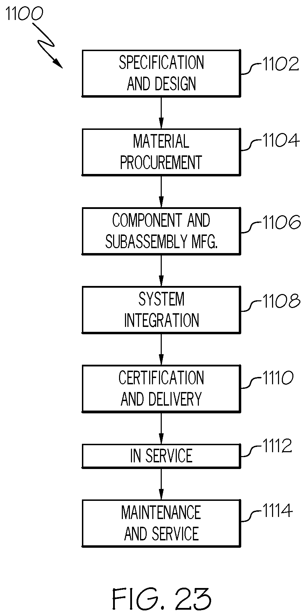

Referring now to Figs. 22 and 23 examples of the system 100, the measuring tool 102, and the method 1000, described herein, may be related to, or used in the context of, an aircraft 1200, as schematically illustrated in Fig. 22, and an aerospace manufacturing and service method 1100, as shown in the flow diagram of Fig. 23. As an example, one or more bore characteristic of holes in components of the aircraft 1200 can be determined using the system 100, the measuring tool 102, and/or according to the method 1000, during any portion of the manufacturing and service method 1100.

Referring to Fig. 22, which illustrates an example of the aircraft 1200. The aircraft 1200 can be any aerospace vehicle or platform. In one or more examples, the aircraft 1200 includes the airframe 1202 having the interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to the airframe 1202 of the aircraft 1200. In yet other examples, the onboard systems 1204 also include one or more other systems 1216, such as, but not limited to, communications systems, avionics systems, software distribution systems, network communications systems, passenger information/entertainment systems, guidance systems, radar systems, weapons systems, and the like. The aircraft 1200 can have any number of components that are manufactured and/or installed using any number of holes. Such holes in components of the aircraft 1200 can be measured and bore characteristics of such holes can be determined using the system 100, the measuring tool 102, and/or according to the method 1000.

Referring to Fig. 23, during pre-production of the aircraft 1200, the manufacturing and service method 1100 includes specification and design 1102 of the aircraft 1200 and material procurement 1104. During production of the aircraft 1200, component and subassembly manufacturing 1106 and system integration 1108 of the aircraft 1200 take place. Thereafter, the aircraft 1200 goes through certification and delivery 1110 to be placed in service 1112. Routine maintenance and service 1114 includes modification, reconfiguration, refurbishment, etc. of one or more systems of the aircraft 1200.

Each of the processes of the manufacturing and service method 1100 illustrated in Fig. 23 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of the system 100, the measuring tool 102, and the method 1000, shown and described herein, may be employed during any one or more of the stages of the manufacturing and service method 1100 shown in the flow diagram illustrated by Fig. 23. In an example, holes in components of the aircraft 1200 can be measured and bore characteristics can be determined using the system 100, the measuring tool 102, and/or according to the method 1000 during a portion of component and subassembly manufacturing 1106 and/or system integration 1108. Further, holes in components of the aircraft 1200 can be measured and bore characteristics can be determined using the system 100, the measuring tool 102, and/or according to the method 1000 while the aircraft 1200 is in service 1112. Also, holes in components of the aircraft 1200 can be measured and bore characteristics can be determined using the system 100, the measuring tool 102, and/or according to the method 1000 during system integration 1108 and certification and delivery 1110. Similarly, holes in components of the aircraft 1200 can be measured and bore characteristics can be determined using the system 100, the measuring tool 102, and/or according to the method 1000 while the aircraft 1200 is in service 1112 and during maintenance and service 1114.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1 and 3-19, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1 and 3-19, referred to above, need be included in every example and not all elements, features, and/or components described herein are necessarily depicted in each illustrative example. Accordingly, some of the elements, features, and/or components described and illustrated in Figs. 1 and 3-19 may be combined in various ways without the need to include other features described and illustrated in Figs. 1 and 3-19, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1 and 3-19, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1 and 3-19, and such elements, features, and/or components may not be discussed in detail herein with reference to each of Figs. 1 and 3-19. Similarly, all elements, features, and/or components may not be labeled in each of Figs. 1 and 3-19, but reference numerals associated therewith may be utilized herein for consistency.

In Figs. 2, 20, 21 and 23, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 2, 20, 21 and 23 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all the operations described need to be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

Further examples are set out in the clauses below:
1. A system for determining bore characteristics of a hole, the system comprising:
   a measuring tool configured to measure the hole and generate data representing the hole; and
   a controller in communication with the measuring tool and configured to determine at least one of the bore characteristics based on the data from the measuring tool.
2. The system of Clause **1,** further comprising a user interface in communication with the controller and configured to visually display the at least one of the bore characteristics.
3. The system of Clause 1 or 2, wherein the measuring tool comprises:
   an optical probe configured to be positioned within the hole, scan a wall of the hole, and generate the data; and
   a probe drive configured to translate and rotate the optical probe within the hole.
4. The system of Clause 3, wherein the optical probe comprises a laser interferometer.
5. The system of Clause 3, wherein the probe drive comprises:
   a linear drive that positions the optical probe along a scan axis; and
   a rotary drive that positions the optical probe about the scan axis.
6. The system of Clause 5, wherein the linear drive comprises:
   a motor;
   a transmission that transfers motion from the motor to the optical probe;
   a pair of limiting switches; and
   an encoder that measures a linear position of the optical probe.
7. The system of any one of Clauses 3-6, wherein:
   the measuring tool further comprises:
   a housing; and
   a collet coupled to the housing and configured to engage a portion of the hole; and
   the optical probe extends through the collet.
8. The system of Clause 7, wherein the measuring tool further comprises:
   a sleeve that couples the collet to the housing;
   a mandrel that moves relative to the collet to expand the collet; and
   an actuator that positions the mandrel relative to the collet.
9. The system of Clause 7, wherein the measuring tool further comprises a plurality of collets that are configured to be interchangeably coupled to the housing.
10. The system of Clause 7, wherein the controller is configured to:
   generate a three-dimensional point cloud comprising XYZ-coordinates and reflective intensity of the wall of the hole and a portion of the collet positioned in the hole;
   perform a transformation of the three-dimensional point cloud with a model of the collet; and
   determine at least one of the bore characteristics based on the three-dimensional point cloud as fit to the model of the collet.
11. The system of Clause 10, wherein the bore characteristics comprise at least one of a diameter of the hole, an offset of the hole, a gap at an interface of the hole, a length of the hole, a bore straightness, and a bore orientation.
12. The system of Clause 9, wherein the bore characteristics further comprises at least one of a smoothness of the hole, debris at an interface, and sealant at the interface.
13. A measuring tool for measuring a hole, the measuring tool comprising:
   a housing;
   a collet coupled to the housing and configured to engage a portion of the hole;
   an optical probe configured to extend through the collet and into the hole, scan a wall of the hole,
   and generate data representing the wall of the hole;
   a linear drive that positions the optical probe along a scan axis; and
   a rotary drive that positions the optical probe about the scan axis.
14. A method for determining bore characteristics of a hole, the method comprising:
   extending an optical probe into the hole along a scan axis;
   rotating the optical probe within the hole about the scan axis;
   scanning a wall of the hole;
   generating data representing the wall of the hole; and
   determining at least one of the bore characteristics based on the data.
15. The method of Clause 14, wherein scanning comprises performing laser interferometry.
16. The method of Clause 14 or 15, wherein generating comprising generating a three-dimensional point cloud comprising XYZ-coordinates and reflective intensity of the wall of the hole.
17. The method of Clause 16, further comprising:
   positioning a portion of a collet in the hole;
   expanding the collet;
   engaging the wall of the hole with the collet;
   scanning a portion of the collet positioned in the hole; and
   generating the data representing the portion of the collet.
18. The method of Clause 17, wherein determining comprises:
   processing the data using a dynamic starting origin operation; and
   further processing the data using a coordinate solving operation.
19. The method of Clause 18, further comprising compensating for environment.
20. The method of Clause 18, wherein determining comprises determining at least one of a diameter of the hole, an offset of the hole, a gap at an interface of the hole, a length of the hole, a bore straightness, a bore orientation, a smoothness of the hole, debris at the interface, and sealant at the interface.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the system 100, the measuring tool 102, and the method 1000 have been shown and described, modifications may occur to those skilled in the art upon reading the specification. The present application includes such modifications and is limited only by the scope of the claims.

## Claims

1. A system (100) for determining bore characteristics (200) of a hole (300), the system (100) comprising:
a measuring tool (102) configured to measure the hole (300) and generate data (110) representing the hole (300); and
a controller (104) in communication with the measuring tool (102) and configured to determine at least one of the bore characteristics (200) based on the data (110) from the measuring tool (102).

2. The system (100) of Claim 1, further comprising a user interface (108) in communication with the controller (104) and configured to visually display the at least one of the bore characteristics (200).

3. The system (100) of Claim 1 or 2, wherein the measuring tool (102) comprises:
an optical probe (114) configured to be positioned within the hole (300), scan a wall (302) of the hole (300), and generate the data (110); and
a probe drive (116) configured to translate and rotate the optical probe (114) within the hole (300); and optionally
wherein the optical probe (114) comprises a laser interferometer (120).

4. The system (100) of Claim 3, wherein the probe drive (116) comprises:
a linear drive (132) that positions the optical probe (114) along a scan axis (130); and
a rotary drive (134) that positions the optical probe (114) about the scan axis (130); and optionally
wherein the linear drive (132) comprises:
a motor (142);
a transmission (144) that transfers motion from the motor (142) to the optical probe (114);
a pair of limiting switches (146); and
an encoder (148) that measures a linear position of the optical probe (114).

5. The system (100) of Claim 3, wherein:
the measuring tool (102) further comprises:
a housing (112); and
a collet (118) coupled to the housing (112) and configured to engage a portion of the hole (300); and
the optical probe (114) extends through the collet (118); and optionally
wherein the measuring tool (102) further comprises:
a sleeve (122) that couples the collet (118) to the housing (112);
a mandrel (124) that moves relative to the collet (118) to expand the collet (118); and
an actuator (126) that positions the mandrel (124) relative to the collet (118).

6. The system (100) of Claim 5, wherein the measuring tool (102) further comprises a plurality of collets (128) that are configured to be interchangeably coupled to the housing (112).

7. The system (100) of Claim 5, wherein the controller (104) is configured to:
generate a three-dimensional point cloud (150) comprising XYZ-coordinates (152) and reflective intensity (154) of the wall (302) of the hole (300) and a portion of the collet (118) positioned in the hole (300);
perform a transformation of the three-dimensional point cloud (150) with a model (156) of the collet (118); and
determine at least one of the bore characteristics (200) based on the three-dimensional point cloud (150) as fit to the model (156) of the collet (118); and optionally wherein the bore characteristics (200) comprise at least one of a diameter (202) of the hole (300), an offset (204) of the hole (300), a gap (206) at an interface (320) of the hole (300), a length (208) of the hole (300), a bore straightness (212), and a bore orientation (214).

8. The system (100) of Claim 6, wherein the bore characteristics (200) further comprises at least one of a smoothness (216) of the hole (300), debris (218) at an interface (320), and sealant (222) at the interface (320).

9. A measuring tool (102) for measuring a hole (300), the measuring tool (102) comprising:
a housing (112);
a collet (118) coupled to the housing (112) and configured to engage a portion of the hole (300);
an optical probe (114) configured to extend through the collet (118) and into the hole (300), scan a wall (302) of the hole (300), and generate data (110) representing the wall (302) of the hole (300);
a linear drive (132) that positions the optical probe (114) along a scan axis (130); and
a rotary drive (134) that positions the optical probe (114) about the scan axis (130).

10. A method (1000) for determining bore characteristics (200) of a hole (300), the method (1000) comprising:
extending an optical probe (114) into the hole (300) along a scan axis (130);
rotating the optical probe (114) within the hole (300) about the scan axis (130);
scanning a wall (302) of the hole (300);
generating data (110) representing the wall (302) of the hole (300); and
determining at least one of the bore characteristics (200) based on the data (110).

11. The method (1000) of Claim 10, wherein scanning comprises performing laser interferometry.

12. The method (1000) of Claim 10, wherein generating comprising generating a three-dimensional point cloud (150) comprising XYZ-coordinates (152) and reflective intensity (154) of the wall (302) of the hole (300).

13. The method (1000) of Claim 12, further comprising:
positioning a portion of a collet (118) in the hole (300);
expanding the collet (118);
engaging the wall (302) of the hole (300) with the collet (118);
scanning a portion of the collet (118) positioned in the hole (300); and
generating the data (110) representing the portion of the collet (118); and optionally
wherein determining comprises:
processing the data (110) using a dynamic starting origin operation; and
further processing the data (110) using a coordinate solving operation.

14. The method (1000) of Claim 13, further comprising compensating for environment (252); or optionally

15. The method (1000) of Claim 13, wherein determining comprises:
processing the data (110) using a dynamic starting origin operation; and
further processing the data (110) using a coordinate solving operation; and
wherein determining comprises determining at least one of a diameter (202) of the hole (300), an offset (204) of the hole (300), a gap (206) at an interface (320) of the hole (300), a length (208) of the hole (300), a bore straightness (212), a bore orientation (214), a smoothness (216) of the hole (300), debris (218) at the interface (320), and sealant (222) at the interface (320).
